# EUROPEAN PATENT APPLICATION

(11) **EP 4 814 225 A1**
(43) Date of publication of application: **30.09.2026**
(21) Application number: 26161124.8
(22) Date of filing: 26.02.2026
(51) Int. Cl.: E04D 3/35, B23P 19/00, B23P 19/04, B21D 11/18, B21D 39/00

(54) **EQUIPMENT FOR SETTING UP PANELS FOR INSULATING ROOFING**

(30) Priority: 28.03.2025 IT 202500006606
(71) Applicant: SAIP S.r.l.- Impianti per Poliuretani, 22044 Inverigo (CO) (IT)
(72) Inventor: MARELLI, Carlo, I-22044 Inverigo, COMO (IT); RAST, Klaus Roland, I-22044 Inverigo, COMO (IT)
(74) Representative: Long, Giorgio

(57) **Abstract**

The present invention relates to equipment for setting up panels for insulating roofing, in particular panels of the "standing seam" type for the insulation of roofs of housings. Specifically, the equipment of the invention concerns an automatic system for cutting and notching the metal sheet and for equipping the insulating panel with reinforcing plates.

In particular, the present invention relates to equipment (1) for setting up panels for insulating roofing, in particular panels for the insulation of roofs of housings of the "standing seam" type, comprising a base structure (100) which supports, in the operating order, a profiling station (2), which singularizes and profiles a metal sheet (L), an overlapping station (3) for overlapping two singularized metal sheets (L), and optionally a preparation station (4) for preparing the singularized metal sheets (L) with reinforcing plates (P), characterized in that said equipment (1) is operatively placed upstream of a polyurethane-foaming and singularization station for said insulating roofing panels.

## Description

The present invention relates to equipment for setting up panels for insulating roofing, in particular panels of the "standing seam" type for the insulation of roofs of housings. Specifically, the equipment of the invention concerns an automatic system for cutting and deforming the metal sheet and for equipping the insulating panel with reinforcing plates.

### Prior Art

The "standing seam" type panels for the insulation of building roofs, mainly produced and used in the USA, allow for the construction of roof coverings by interlocking various panels and fixing them to one another and to the underlying structure by means of screws and fixing hooks. They consist of a double metal sheet enclosing in sandwich fashion a layer of expanded polyurethane which acts as an insulator.

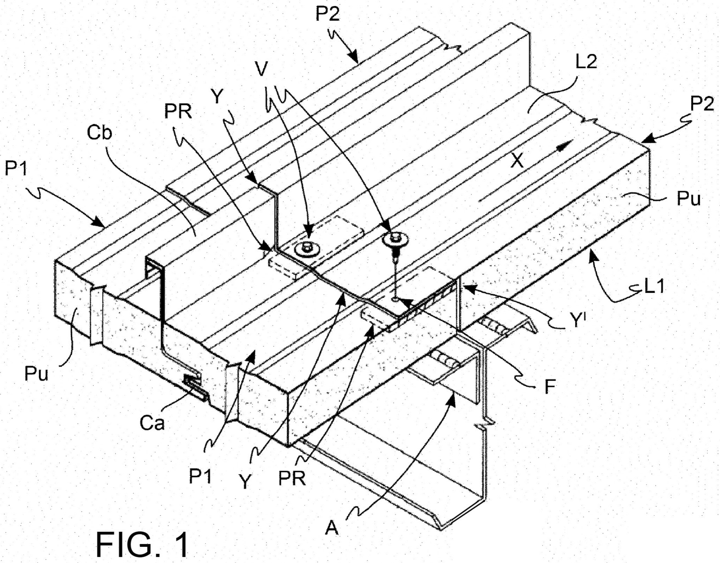

Figure 1 illustrates a detail of two installed panels. The figure also shows, in transparency, the reinforcing plates that must be inserted into the polyurethane layer just beneath the metal sheet, so as to facilitate the final fixing of the panels with screws.

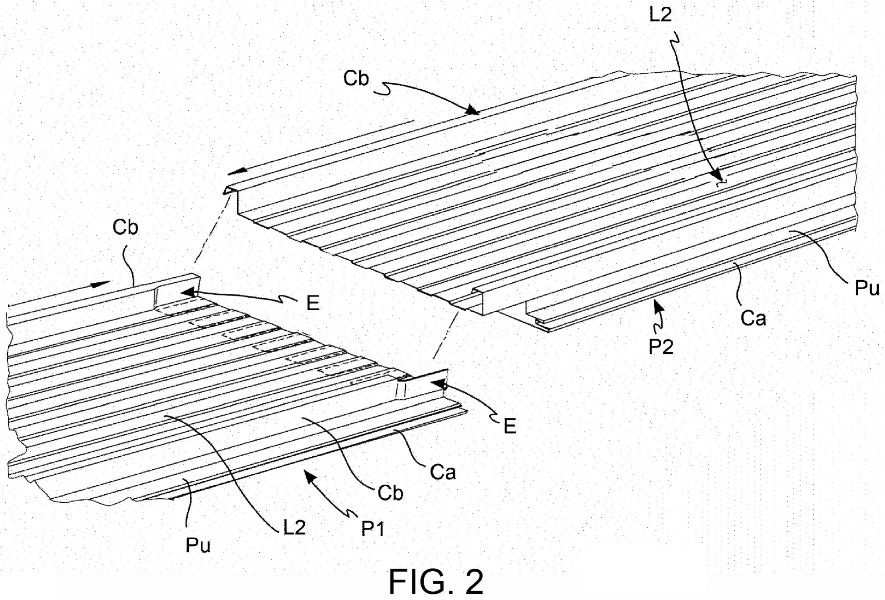

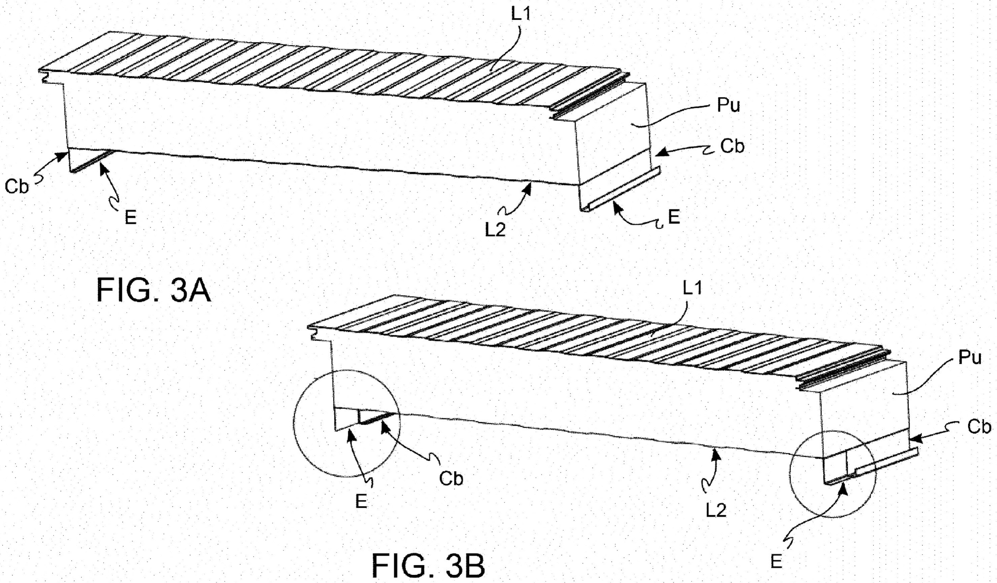

The installation of such panels, however, has a complexity concerning their longitudinal overlapping. As can be seen from Figures 2, 3A and 3B, in order to allow such overlapping, it is necessary to modify the profile of the metal sheet at the overlapping ends by means of deformation and cutting.

Currently, these deformations, as well as the insertion of the reinforcing plates, are carried out off-line manually before the panels are shipped to the job site or directly at the job site. However, manual operations, in addition to being costly (labour cost, double handling of the panels with repackaging), can also be imprecise and repetitive and in any case do not allow for high productivity.

Patent publication EP 4238692 A1 of the same Applicant addresses this problem and resolves it by automating the introduction of the reinforcing plates, but provides an operating sequence that requires complex downstream punching operations.

The object of the present invention is therefore to implement equipment capable of setting up the above-described insulating panels in a fully automatic mode.

### Summary of the Invention

The object of the present invention is equipment for setting up panels for insulating roofing, in particular panels of the "standing seam" type for the insulation of roofs of housings, as outlined in the appended claims, the definitions of which form an integral part of the present description.

In particular, the object of the invention is:
1) equipment for setting up panels for insulating roofing, in particular panels for the insulation of roofs of housings of the "standing seam" type, comprising a base structure which supports, in the operating order, a profiling station, which singularizes and profiles a metal sheet, an overlapping station for two singularized metal sheets, and, optionally, a preparation station for the singularized metal sheets with reinforcing plates, characterized in that said equipment is operatively placed upstream of a polyurethane-foaming and singularization station for said insulating roofing panels;
2) equipment as in point 1, wherein the profiling station comprises a carriage movable along the advancement direction of the metal sheet, wherein the carriage supports a deformation unit for deforming one end of a metal sheet and a cutting unit for cutting the metal sheet, the cutting unit being placed downstream of the deformation unit, and wherein the deformation unit is configured to perform the deformation and notching of the metal sheet by means of a first right die, a second right die, a first left die, and a second left die, wherein the first right die and the first left die are configured to perform the deformation of the edge of the metal sheet, while the second right die and the second left die are configured to perform the notching, and wherein the cutting unit is configured to singularize the metal sheet immediately downstream of the edge which has been notched and deformed;
3) equipment as in point 2, wherein the cutting unit comprises shears including a cutting die having a core for transversely cutting the metal sheet;
4) equipment as in any one of points 1 to 3, wherein downstream of the profiling station and upstream of the overlapping station for two singularized metal sheets, a movement device is placed comprising a frame on which a first and a second roller are rotatably vertically supported, wherein the shaft of the first roller is directly connected to a motor drive, while the shaft of the second roller is connected to the shaft of the first roller by means of a gear adapted to rotate it in the opposite direction;
5) equipment as in point 4, wherein a second movement device is placed downstream of the overlapping station and immediately upstream of the preparation station;
6) equipment as in any one of points 1 to 5, wherein the overlapping station for the metal sheets comprises a lifting device for lifting the end of a metal sheet and a joining unit for joining two partially overlapped metal sheets;
7) equipment as in point 6, wherein the lifting device comprises two idle rollers, arranged vertically, i.e., one on top of the other, on a support structure, the support structure comprising an upper bar on which an actuator acts, for example a pneumatic actuator, for lifting the tail end of a singularized metal sheet;
8) equipment as in point 6 or 7, wherein the joining unit comprises a movable carriage sliding along the advancement direction of the partially overlapped metal sheets, wherein the movable carriage supports an unwinding device for unwinding an adhesive tape from a reel and an applicator device for applying the adhesive tape along the joint of two adjacent metal sheets;
9) equipment as in point 8, wherein the unwinding device comprises a gripper, transversely movable with respect to the advancement direction of the metal sheets, between a distal position with respect to the reel and a proximal position with respect to the reel, wherein preferably the gripper is of the duckbill type and comprises two jaws in the form of plates, connected to a lever mechanism actuated to open and close by an actuator;
10) equipment as in point 9, wherein a cutting device is placed in a proximal position with respect to the reel, the cutting device being configured to cut a strip of tape to be applied to the joint between two partially overlapped, adjacent metal sheets, the cutting device comprising a wire heated blade mounted to a C-shaped support and an abutment arranged at the bottom, wherein both the support and the abutment are connected to respective actuators configured to lower the support and lift the abutment, respectively, up to abut between the wire blade and the abutment;
11) equipment as in any one of points 8 to 10, wherein the applicator device comprises a transverse bar which supports a coupling mask having a lower surface which negatively reproduces the surface of the metal sheet, wherein the coupling mask comprises a plurality of suction cups connected to a vacuum source and wherein the transverse bar is coupled to an actuator configured for a vertical movement of the coupling mask, a counter-bar preferably being placed below the coupling mask, coupled to an actuator configured for a vertical movement in the opposite direction with respect to the actuator of the transverse bar;
12) equipment as in any one of points 1 to 11, wherein the preparation station comprises a bridge structure placed straddling a sliding plane of the jointed metal sheets, wherein the bridge structure comprises, in a position adjacent to one end, a feeding member for reinforcing plates, wherein a positioning device for the reinforcing plates is operatively connected to the feeding member, so as to pick up a plurality of reinforcing plates and deposit them onto a tail end of a metal sheet, in an adjacent position with respect to the joint of two metal sheets;
13) equipment as in point 12, wherein the feeding member comprises a vibrating tank and an orienting chute for the reinforcing plates, which deposits a plurality of plates in contact with one another on an accumulation mat, wherein the positioning device comprises a transfer device for transferring the plates onto a shuttle, on which the plates are positioned in a plurality of seats, one for each reinforcing plate, in a row in number and in a spaced apart condition corresponding to that they will take on the metal sheet;
14) equipment as in point 13, wherein the transfer device comprises a support, which is transversely movable with respect to the shuttle, between a gripping position at the accumulation mat and a release position at the shuttle, wherein the support comprises an arm which supports the suction heads;
15) equipment as in any one of points 12 to 14, wherein the positioning device comprises a positioning member, transversely movable with respect to the advancement direction of the sheets between a gripping position for gripping the reinforcing plates from the shuttle and a release position for releasing the plates onto the metal sheet, wherein the positioning member comprises a gripping bar connected to suction means, comprising a plurality of suction cups arranged at the same distance between the plates on the shuttle and each adapted to pick up a plate;
16) equipment as in point 15, wherein the gripping bar is connected to a vertical actuation system, so as to be lowered onto the shuttle in the gripping position for gripping the plates, lifted once the plates have been gripped, lowered to the release position for releasing the plates onto the metal sheet, and lifted again to the initial position and wherein the vertical actuation system is secured to a bracket connected to a slide for sliding on the transverse guide.

Further features and advantages of the present invention will become more apparent from the description of some embodiments, provided hereinafter by way of example and without limitation, with reference to the following figures:
Figure 1 shows a perspective view of a detail of the installation of "standing seam" panels;
Figure 2 shows a perspective view of the overlapping coupling of two "standing seam" panels;
Figures 3A and 3B show perspective views of a detail of a "standing seam" panel, respectively before and after the operation of cutting and deforming the overlapping ends;
Figures 4A, 4B and 4C show, respectively, a perspective view, a top plan view, and a side view of the equipment according to the invention;
Figures 5A and 5B show, respectively, a top plan view and a perspective view of a first processing station of the equipment of Figure 4A;
Figure 6 shows a perspective view of the metal sheet after cutting following the passage through the processing station of Figure 5A;
Figures 7A and 7B show, respectively, a perspective view and a front view of a second processing station of the equipment of Figure 4A;
Figure 7C shows a front view of a detail of the processing station of Figure 7A;
Figure 7D shows a perspective view of a different detail of the processing station of Figure 7A;
Figures 7E and 7F show front views of two further details of the processing station of Figure 7A;
Figure 8 shows a partial perspective view of two overlapping sheets after passing through the device of Figure 7D;
Figure 9 shows a perspective view of a feeding device for the sheet of the equipment of Figure 4A;
Figure 10A shows a perspective view of a third processing station of the equipment of Figure 4A;
Figure 10B shows a perspective view of a detail of the processing station of Figure 10A;
Figure 10C shows a top plan view of a different detail of the processing station of Figure 10A;
Figure 10D shows a perspective view of a further detail of the processing station of Figure 10A.

### Detailed Description of the Invention

The present invention relates to equipment for setting up panels for insulating roofing, in particular panels for the insulation of roofs of housings of the "standing seam" type. Specifically, the equipment of the invention concerns an automatic system for cutting and deforming the metal sheet and for equipping the insulating panel with reinforcing plates.

Figure 1 shows the coupling of four panels P1, P2 (shown partially and in section) resting on support flanges A of a support structure S of the roof of a building. Panels P1, P2 comprise a sandwich structure having an intermediate layer of expanded polyurethane PU and external lower and upper metal sheets L1 and L2. The panels P1 are coupled to one another transversely with respect to the pitch of the roof, while each of them is coupled with the respective panel P2 along the longitudinal direction (arrow X indicates the upward slope of the roof). Therefore, panels P1 are interlocked to each other via first complementary profiles Ca, formed in the inner metal sheet and in the polyurethane foam, and second complementary profiles Cb, formed in the upper outer metal sheet L2.

The fixing of the panels to the roof is achieved by means of interlocking hooks in the joint area, which are fixed to the structure of the building by means of self-tapping screws. At the end of the fixing process, the joint is "seamed" with a mobile tool formed by pairs of profiling rollers.

Conversely, the longitudinal coupling between panels P1 and panels P2 is achieved by overlapping said upper metal sheets L2 (points Y, Y'). The coupling between panels P1 and P2 is completed by fixing with screws V that pass through appropriate holes F made in the upper metal sheet L2 and through reinforcing plates PR embedded in the PU layer, immediately below the upper metal sheet L2. In this way, the flat portion of the covering metal sheet adheres perfectly to the covered metal sheet. Depending on the roof slopes and local conditions, sealants may be applied between the covered and covering metal sheets. The assembly rules of the panels are not the subject of the present patent.

As shown in Figure 2, in order for the longitudinal coupling with overlapping between the complementary profiles Cb of two upper metal sheets L2 to be carried out, it is necessary to deform the ends E of the profiles Cb and at the same time to profile the ends. Figures 3A and 3B show, respectively, a portion of an end of a panel as resulting at the exit of the forming equipment (typically, a known-type double belt equipment) and after the transverse cutting of the panel (Figure 3A), and the same end portion in which the ends E of the complementary profiles Cb have been modified to allow installation at the site (Figure 3B). As can be seen, both ends have been deformed and cut appropriately according to a geometry dictated by the typical shape of "standing seam" panels.

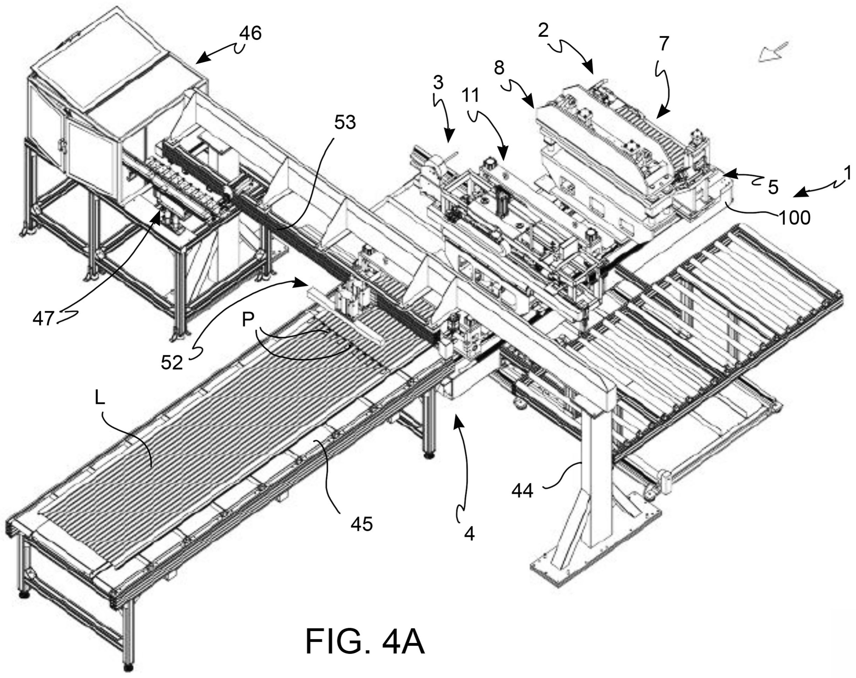

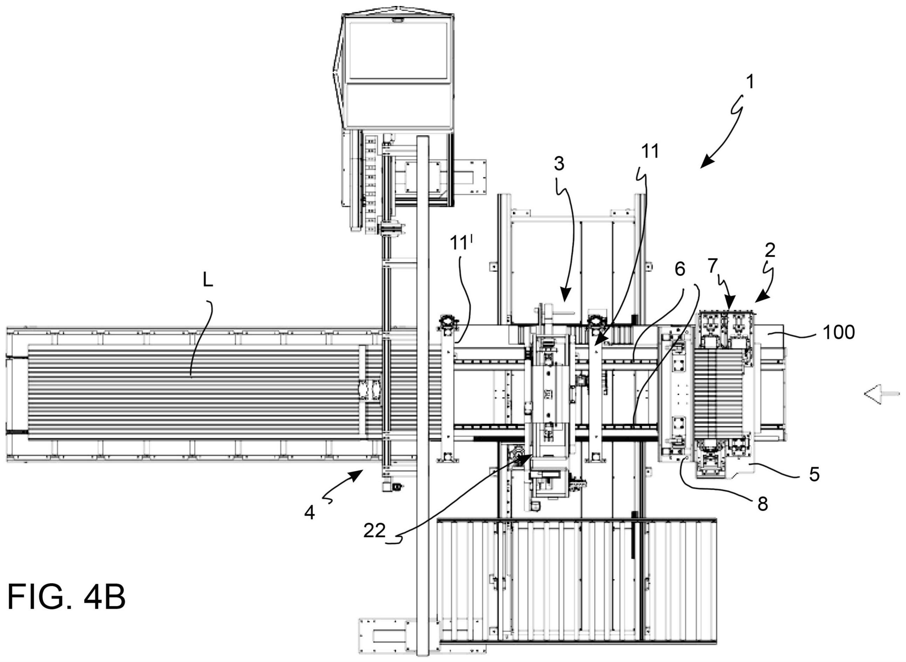

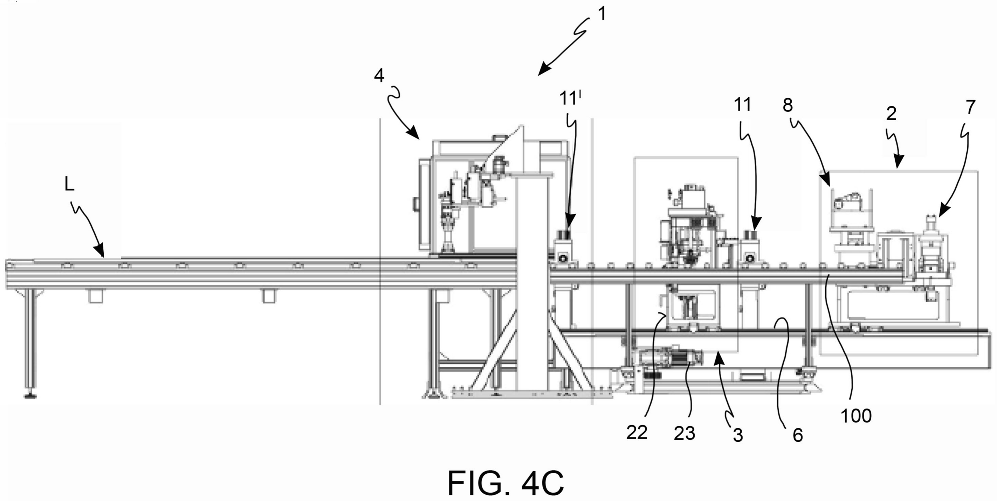

As previously mentioned, such deformation and cutting of the ends E, as well as the introduction of the reinforcing plates PR into the PU layer, are normally carried out manually on the panel P at the end of its production. The equipment described in EP 4238692A1, with reference to Figures 4-14, allows the production of the final panel P (i.e., the panel equipped with the modified ends E and with the reinforcing plates PR) in-line, downstream of the panel forming equipment.

The present invention, on the other hand, carries out a different operation upstream of the PU foaming, preliminarily overlapping the metal sheets and preparing the reinforcing plates on the metal sheet in such a way that they are subsequently embedded into the polyurethane layer during foaming. In this way, it will be possible to singularize the final panels by merely cutting the upper metal sheet L1 by means of shears and cutting the PU layer with water jet systems. The preliminary overlapping of the metal sheets carried out by the equipment of the present invention makes it possible to keep the portion of metal sheet intended for the overlapping of the various panels during installation free from PU.

With reference to Figures 4A-4C, the equipment according to the invention, indicated as a whole by the number 1, comprises a base structure 100 which supports, in the operating order, a profiling station 2, which receives the metal sheet L advancing in the direction of the arrow, an overlapping station 3 for two singularized metal sheets L, and, optionally, a preparation station 4 for the singularized metal sheets L with reinforcing plates P.

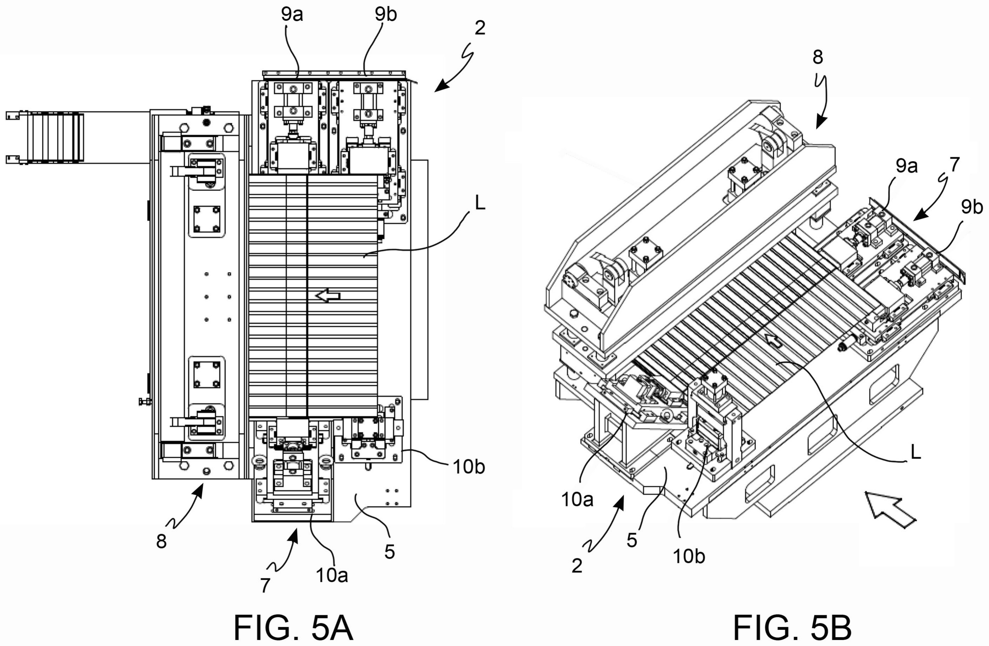

As also shown in Figures 5A and 5B, the profiling station 2 comprises a carriage 5 movable along a rail 6 by means of a motor drive (not shown). The movable carriage 5 is configured to advance at the line speed, that is, in synchrony with the advancement of the metal sheet L, or at a lower speed, as will be further clarified below. The carriage 5 supports a deformation unit 7 and a cutting unit 8 placed downstream of the deformation unit 7.

The deformation unit 7 is configured to perform the deformation and trimming (or notching, i.e., the cutting of the corners of the metal sheet so as to obtain a sheet with one or more right angles) of the metal sheet L in order to obtain the end profiles E shown in Figure 3B.

To this end, the deformation unit 7 comprises a first right die 9a, a second right die 9b, a first left die 10a, and a second left die 10b, where the terms "right" and "left" refer to the feeding direction of the metal sheet L.

The geometry and movement of the dies 9a, 9b, 10a, 10b strictly depend on the type and extent of the cuts and deformations to be imparted to the metal sheet L, as shown in Figures 3A and 3B, and therefore will not be described in detail, as they are within the capabilities of a person skilled in the field of metal sheet forming dies.

In particular, the first right die 9a and the first left die 10a carry out the deformation of the edge of the metal sheet L, while the second right die 9b and the second left die 10b carry out the notching. In a first operating phase, the movable carriage 5 advances in synchrony with the movement of the metal sheet L, positioning the second right and left dies 9b, 10b to carry out the notching, which occurs by shearing with scrap, under a condition of homokinetism between the movable carriage 5 and the metal sheet L; then, in a second operating phase, the movable carriage 5 proceeds at a lower speed, so that the trimmed portion of the metal sheet L, advancing at line speed, is positioned under the first right and left dies 9a, 10a to perform the deformation, which takes place under a condition of homokinetism between the movable carriage 5 and the metal sheet L. The dies are provided with lead-ins and an extended stroke of the die to ensure the correct insertion of the metal sheet L during production start-up.

The cutting unit 8 carries out the singularization of a metal sheet L immediately downstream of the portion that has been notched and deformed. The cutting unit 8, of conventional type, comprises shears including a cutting die having a core so as to be able to cut the undercut without deforming the metal sheet. In a third operating phase, in which the movable carriage 5 continues to advance at a lower speed compared to the line speed, the portion of metal sheet L to be cut transversely is positioned under the shears, which then perform the cutting under a condition of homokinetism between the movable carriage 5 and the metal sheet L.

The movable carriage 5 is then brought back to the starting position.

Essentially, the movable carriage 5 performs the following movements in order:
movement at line speed up to the execution of the notching;
movement at reduced speed until the repositioning of the notched portion of metal sheet L under the first right and left dies 9a, 10a;
movement at line speed during the deformation of said notched portion of metal sheet L;
movement at reduced speed until the repositioning of the notched and deformed portion of metal sheet L under the shears of the cutting unit 8;
movement at line speed during the cutting of the metal sheet L for its singularization;
return movement to the initial position.

In certain embodiments, the deformation unit 7 and the cutting unit 8 may be reversed, i.e., the cutting unit 8 is placed upstream, so that the transverse cutting is carried out first, followed by the notching and deformation.

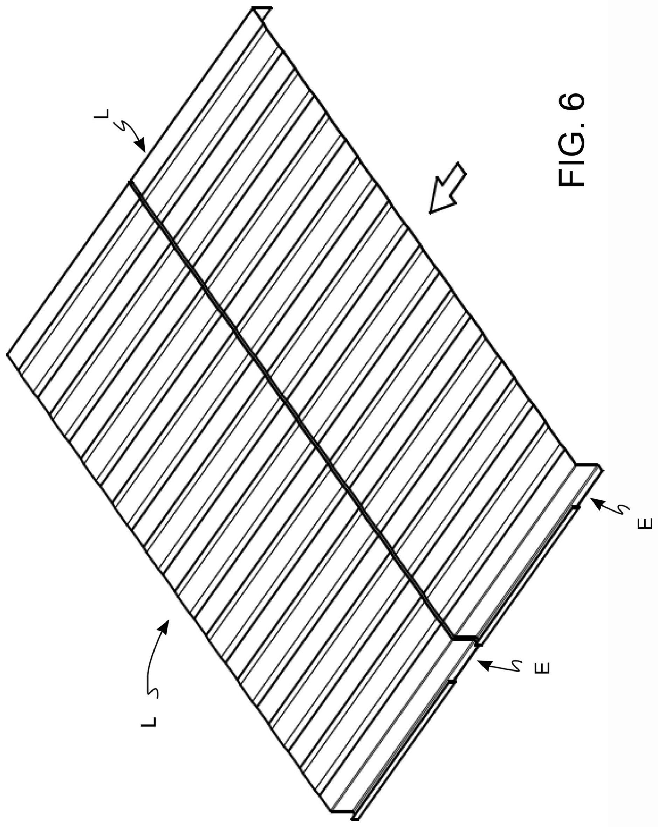

Downstream of the profiling station 2, two singularized metal sheets L appear as shown in Figure 6. As can be seen in the figure, there is a small gap between the two metal sheets L, due to the shearing with scrap.

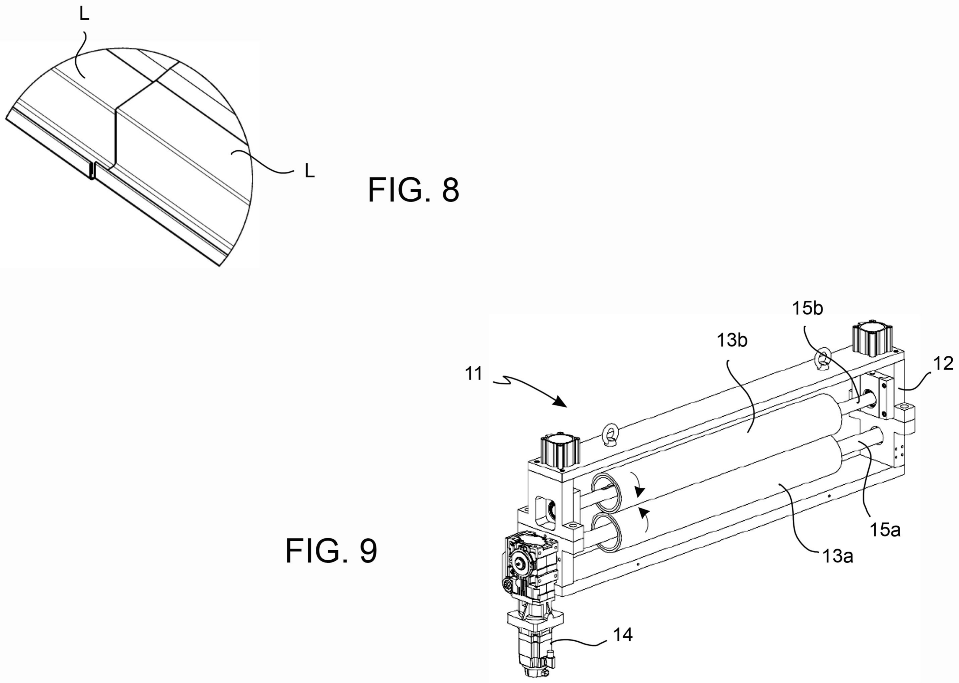

Downstream of the profiling station 2 and immediately upstream of the overlapping station 3 for two singularized metal sheets L, a movement device 11 is placed, shown in Figure 9.

The movement device 11 comprises a frame 12, on which a first and a second roller 13a, 13b are rotatably supported in a vertical position, wherein the shaft 15a of the first roller 13a is directly connected to a motor drive 14, while the shaft 15b of the second roller 13b is connected to the shaft 15a of the first roller 13a by means of a gear adapted to rotate it in the opposite direction, as shown by the arrows in Figure 9. The motor drive 14 is configured to vary the rotation speed according to a predefined command.

A second movement device 11', entirely similar to the first one, is placed downstream of the overlapping station 3 and immediately upstream of the preparation station 4.

The movement devices 11, 11' are arranged so that the metal sheet L can pass between the two rollers 13a, 13b, thereby being moved, which may occur at the line speed or at a greater speed, as will be clarified below.

The overlapping station 3 of the metal sheets L comprises a lifting device 16 for lifting the end of a metal sheet L and a joining unit 17 for joining two partially overlapped metal sheets L.

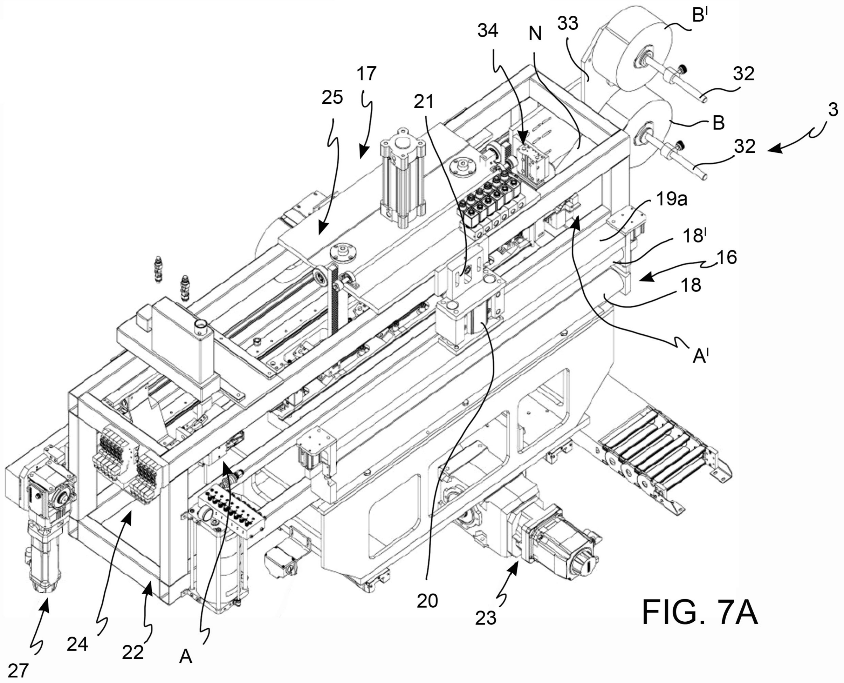

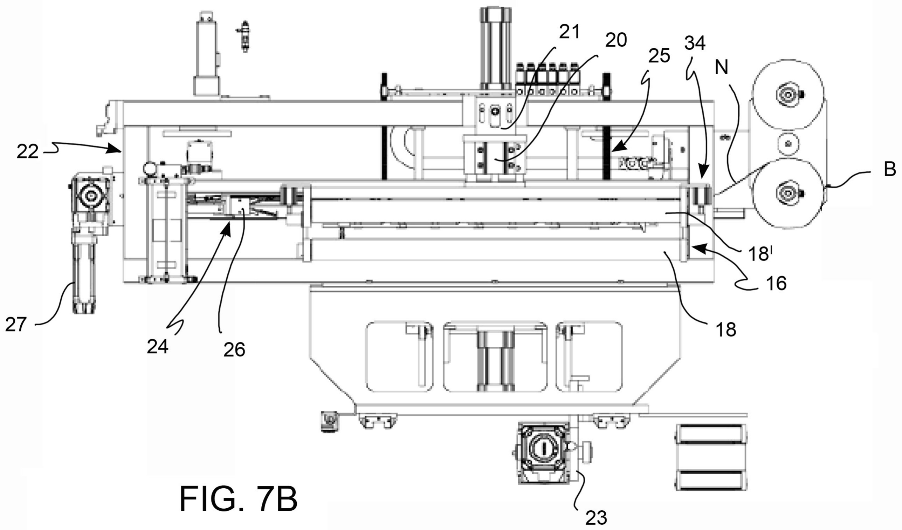

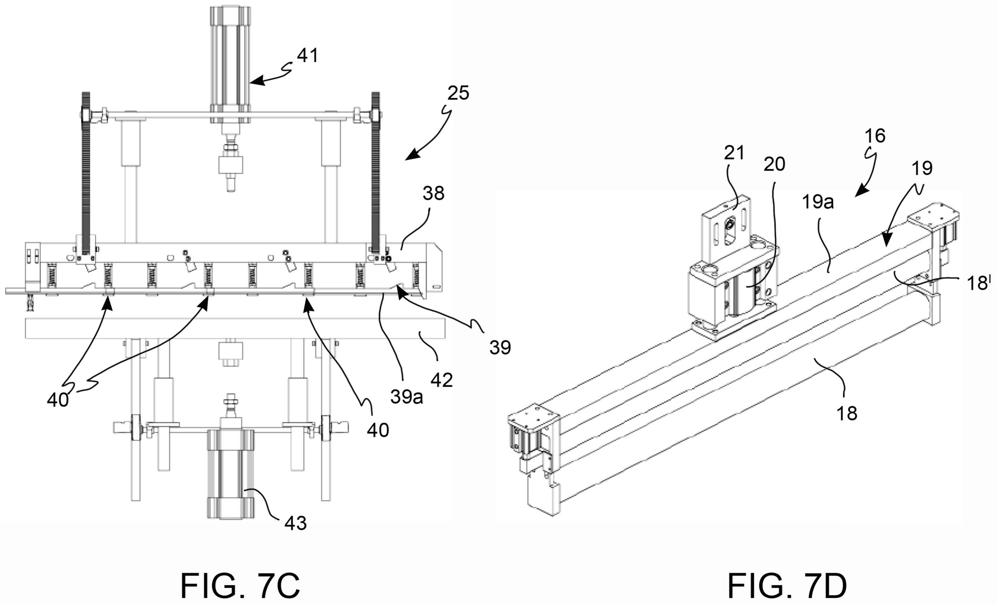

The lifting device 16, shown in isolation in Figure 7D, comprises two idle rollers 18, 18' arranged vertically, i.e., one above the other, on a support structure 19. The support structure 19 comprises an upper bar 19a on which an actuator 20 acts, for example a pneumatic actuator, which is in turn fixed, by means of a plate 21, to the joining unit 17.

The metal sheet L passes between the two rollers 18, 18', and the actuator 20 is configured to lift a tail end of a downstream singularized metal sheet L when the first movement device 11 makes an upstream singularized metal sheet L advance at a speed greater than the line speed. In this way, the head end of the latter is positioned beneath the lifted downstream metal sheet L. At this point, the actuator 20 lowers the rollers 18, 18' so that the tail end of the downstream metal sheet L overlaps the head end of the upstream metal sheet L, achieving the overlap shown in Figure 8.

The joining unit 17 serves the function of temporarily joining together two adjacent singularized metal sheets L, by means of the application of an adhesive tape.

The joining unit 17 comprises a movable carriage 22, sliding on the rail 6 by means of a motor drive 23 configured for movement in homokinetism with the partially overlapped metal sheets L. The movable carriage 22 supports an unwinding device 24 for an adhesive tape N and an applicator device 25 for the adhesive tape N along the joint of two adjacent metal sheets L.

The adhesive tape N is unwound from a reel B placed at a lateral end of the movable carriage 22. The reel B is supported on a shaft 32 pivoted on a movable plate 33 which supports a second shaft 32 for a second reel B', so as to allow quick replacement of the reel B when depleted.

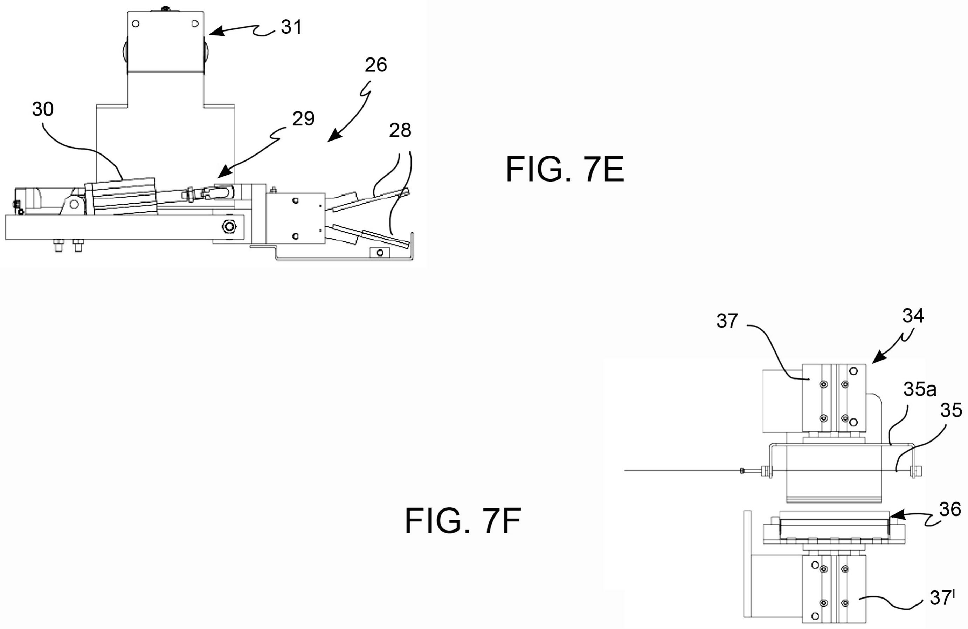

The unwinding device 24 for the adhesive tape N comprises a gripper 26, shown in isolation in Figure 7E. The gripper 26 is transversely movable, with respect to the advancement direction of the metal sheets L, along a guide (not visible) by means of a motor drive 27, between a distal position A with respect to the reel B and a proximal position A' with respect to the reel B.

The gripper 26 is of the duckbill type and comprises two jaws 28 in the form of plates, connected to a lever mechanism 29 actuated to open and close by an actuator 30, for example a pneumatic actuator. The gripper 26 also comprises a carriage 31 configured to slide along said guide.

In the proximal position A' with respect to the reel B, a cutting device 34 is placed, shown in isolation in Figure 7F, configured to cut the strip of tape N to be applied to the joint between two partially overlapped adjacent metal sheets L.

The cutting device 34 comprises a wire heated blade 35 mounted on a C-shaped support 35a and an abutment 36 arranged underneath. Between the wire blade 35 and the abutment 36 there is a spacing through which the tape N to be cut passes. Both the support 35a and the abutment 36 are connected to respective actuators 37, 37', for example pneumatic actuators, which respectively lower the support 35a and raise the abutment 36 until abutment occurs between the wire blade 35 and the corresponding abutment 36.

The applicator device 25, shown in isolation in Figure 7C, comprises a transverse bar 38 which supports a coupling mask 39 having a lower surface 39a that negatively reproduces the surface of the metal sheet L. The coupling mask 39 comprises a plurality of suction cups 40 connected to a vacuum source (not shown). The transverse bar 38 is coupled to an actuator 41, for example a pneumatic actuator, configured for vertical movement of the coupling mask 39.

Below the coupling mask 39, a counter-bar 42 is placed, coupled to an actuator 43, for example a pneumatic actuator, configured for vertical movement, in the opposite direction to that of the actuator 41 of the transverse bar 38.

Between the counter-bar 42 and the coupling mask 39, there is a spacing through which both the metal sheets L to be joined and the tape N pass.

The operating sequence of the overlapping station 3 is as follows.

When two adjacent singularized metal sheets L advancing together are overlapped through the combined action of the lifting device 16 and the movement device 1, as previously described, they pass in said partially overlapped configuration (Figure 8) into the joining unit 17, which advances longitudinally with homokinetic motion. At this point, the gripper 26 is translated by the actuator 27 from the distal position A to the proximal position A', where the jaws 28 close to grasp one end of the tape N. Then, by movement in the opposite direction, the gripper 26 unwinds a strip of tape N up to the distal end A, and the suction cups 40 of the coupling mask 39 aspirate the non-adhesive side of the tape N so as to make it adhere to the surface 39a. The strip of adhesive tape N is then singularized by the cutting device 34. At this point, the actuators 41 and 43, respectively, lower the coupling mask 39 and raise the counter-bar 42, so as to make the singularized strip of tape N adhere to the upper surface of the metal sheets L, thereby obtaining the joint.

The overlapping station 3 is then returned to the initial position for the joining of two subsequent metal sheets L.

The preparation station 4, when present (as in the figures), is placed downstream of the overlapping station 3 and of the second movement device 11', and comprises a bridge structure 44 placed straddling a sliding plane 45 of the joined metal sheets L. The bridge structure 44 comprises, in a position adjacent to one end, a feeding member 46 for reinforcing plates P. A positioning device 47 for the reinforcing plates P is operatively connected to the feeding member 46, so as to pick up a plurality of reinforcing plates P and deposit them onto a tail end of a metal sheet L, in a position adjacent to the joint between two metal sheets L, as will be described below.

The feeding member 46 comprises a vibrating tank and an orienting chute for the reinforcing plates P, which deposits a plurality of plates P in contact with one another on an accumulation mat 48. The feeding member 46 is entirely similar to that described in EP 4238692A1, and therefore will not be further described herein.

The positioning device 47 comprises a transfer device 50 (known as a "pick-and-place" device) for the plates P onto a shuttle 49, on which the plates P are positioned in a row in number and in a spaced apart condition corresponding to the position they will assume on the metal sheet L.

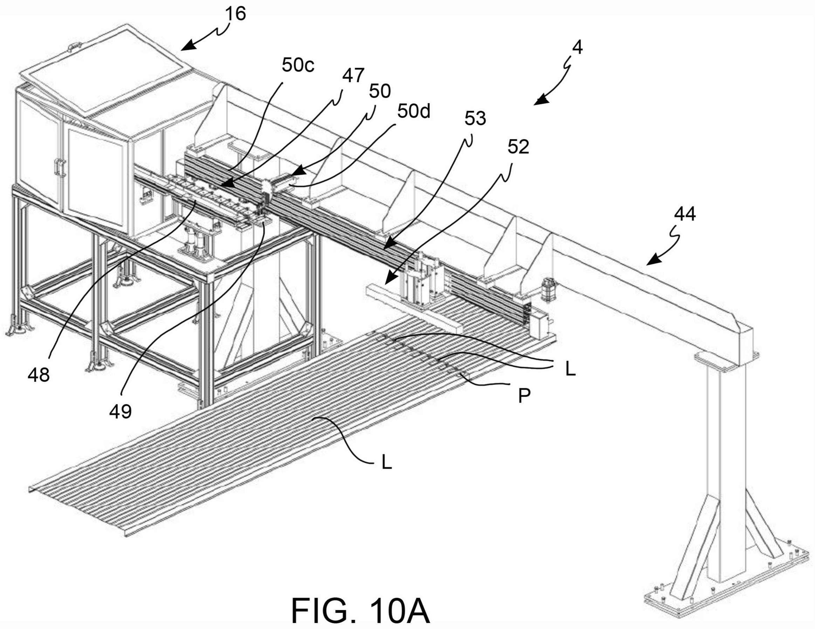

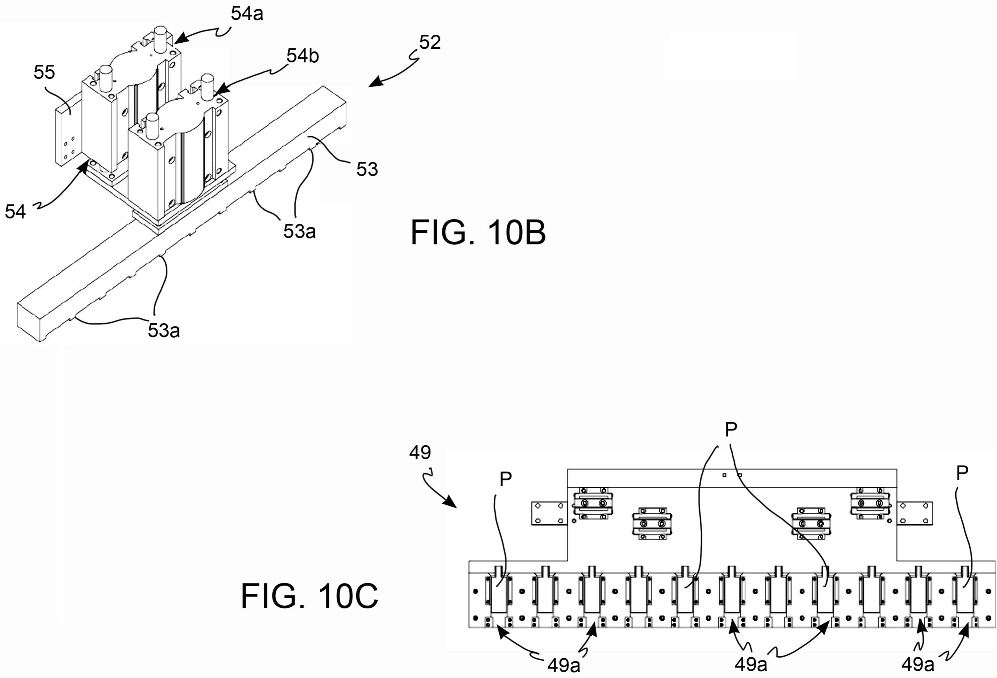

The shuttle 49, shown in isolation in Figure 10C, is stationary and comprises a plurality of seats 49a, one for each reinforcing plate P.

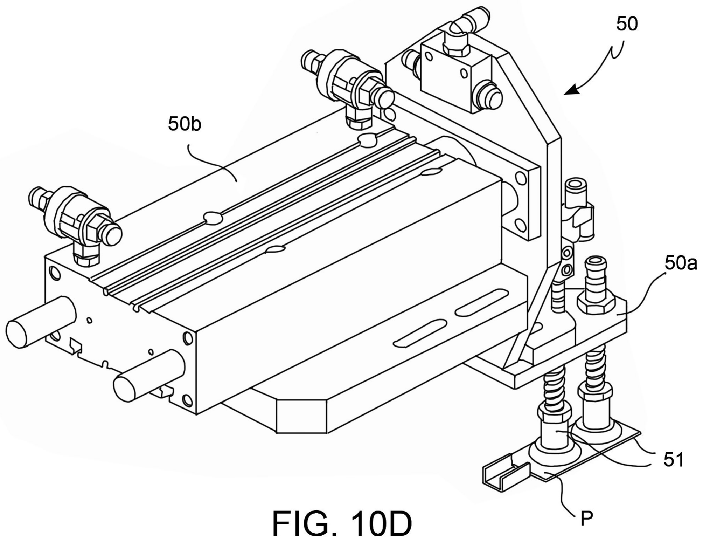

The transfer device 50, shown in isolation in Figure 10D, is similar to that described in EP 4238692A1 and comprises a support 50b, which is transversely movable with respect to the shuttle 49, between a gripping position at (i.e., above) the accumulation mat 48 and a release position at (i.e., above) the shuttle 49. The support 50b comprises an arm 50a that supports suction heads 51 (in the embodiment shown, two suction heads 51, though there could also be only one or more than two) connected by a duct to suction means (not shown).

The support 50b is movable along a guide 50c by means of a motor drive 50d and is configured to perform three movements: a lowering and lifting movement of the arm 50a with the suction heads 51, both during the picking of the plates P from the accumulation mat 48 and during the release of the plates P onto the shuttle 49; a transverse movement with respect to the accumulation mat 48 and the shuttle 49; a longitudinal movement along the accumulation mat 48 and along the shuttle 49, so as to pick up the plates P one by one from the accumulation mat and place them in the respective seats 49a of the shuttle 49.

The positioning device 47 further comprises a positioning member 52, transversely movable with respect to the advancement direction of the metal sheets L between a gripping position for gripping the reinforcing plates P from the shuttle 49 and a release position for releasing the plates P onto the metal sheet L.

The positioning member 52, shown in isolation in Figure 10B, is movable along a transverse guide 53 by means of a suitable motor drive and comprises a gripping bar 53 connected to suction means (not shown), comprising a plurality of suction cups 53a arranged at the same distance between the plates P on the shuttle 49 and each adapted to pick up one plate P.

The gripping bar 53 is connected to a vertical actuation system 54, so as to be lowered onto the shuttle 49 in the gripping position for picking up the plates P, lifted after gripping the plates P, lowered to the release position for releasing the plates P onto the metal sheet L, and lifted again to the initial position. The vertical actuation system 54 is fixed to a bracket 55 connected to a slide (not shown) for sliding along the transverse guide 53.

In the embodiment of the figures, the vertical actuation system 54 comprises a first pneumatic actuator 54a for moving the gripping bar 53 during the gripping phase of the plates P from the shuttle 49, and a second pneumatic actuator 54b for moving the gripping bar 53 during the release phase of the plates P onto the metal sheet L. This is due to the fact that the shuttle 49 and the metal sheet L are placed at two different heights from the ground and that the pneumatic actuators are configured for a fixed stroke. However, in other embodiments not shown, the vertical actuation system 54 may comprise a single actuator, for example of the brushless type, which can be programmed for both movements.

The release of the plates P onto the metal sheet L is performed "on the fly," that is, without stopping or slowing down the advancement of the metal sheets L. To facilitate the maintenance of the plates P in position, it is possible to provide for the deposition of an adhesive either on the plates or on the portion of the metal sheet L intended to receive them.

The metal sheets L, joined and equipped with reinforcing plates P as described above, are then brought to the next phase (not shown as it is not the subject of the invention) in which a layer of expanding polyurethane is dispensed onto them in a sandwich configuration with a second metal sheet that will be placed above the polyurethane, according to known techniques. At this point, "standing seam" type panels will be formed, which can be singularized by cutting the upper metal sheet with a disc and the polyurethane layer with a water jet system, up to the temporary joint between the two adjacent metal sheets L, which can then be separated without the need for further cuts or drawing.

It is evident that only some particular embodiments of the present invention have been described, to which the person skilled in the art will be able to make all the modifications necessary for its adaptation to specific applications, without however departing from the scope of protection defined by the claims of the present invention.

## Claims

1. An equipment (1) for setting up panels for insulating roofing, in particular panels for the insulation of roofs of housings of the "standing seam" type, comprising a base structure (100) which supports, in the operating order, a profiling station (2), which singularizes and profiles a metal sheet (L), an overlapping station (3) for overlapping two singularized metal sheets (L), and optionally a preparation station (4) for preparing the singularized metal sheets (L) with reinforcing plates (P), **characterized in that** said equipment (1) is operatively placed upstream of a polyurethane-foaming and singularization station for said insulating roofing panels.

2. The equipment (1) according to claim 1, wherein the profiling station (2) includes a carriage (5) movable along the advancement direction of the metal sheet (L), wherein the carriage (5) supports a deformation unit (7) for deforming one end of a metal sheet (L) and a cutting unit (8) for cutting the metal sheet (L), and wherein the deformation unit (7) is configured to perform the deformation and notching of the metal sheet (L) by means of a first right die (9a), a second right die (9b), a first left die (10a), and a second left die (10b), wherein the first right die (9a) and the first left die (10a) are configured to perform the deformation of the edge of the metal sheet (L), while the second right die (9b) and the second left die (10b) are configured to perform the notching, and wherein the cutting unit (8) is configured to singularize the metal sheet (L) immediately downstream of the edge which has been notched and deformed.

3. The equipment (1) according to claim 2, wherein the cutting unit (8) comprises shears including a cutting die having a core for transversely cutting the metal sheet (L).

4. The equipment (1) according to any one of claims 1 to 3, wherein a movement device (11) comprising a frame (12) is placed downstream of the profiling station (2) and upstream of the overlapping station (3) for two singularized metal sheets (L), on which frame (12) a first and a second roller (13a, 13b) are rotatably vertically supported, wherein the shaft (15a) of the first roller (13a) is directly connected to a motor drive (14), while the shaft (15b) of the second roller (13b) is connected to the shaft (15a) of the first roller (13a) by means of a gear adapted to rotate it in the opposite direction.

5. The equipment (1) according to claim 4, wherein a second movement device (11') is arranged downstream of the overlapping station (3) and immediately upstream of the preparation station (4).

6. The equipment (1) according to any one of claims 1 to 5, wherein the overlapping station (3) for overlapping the metal sheets (L) comprises a lifting device (16) for lifting the end of a metal sheet (L) and a joining unit (17) for joining two partially overlapped metal sheets (L).

7. The equipment (1) according to claim 6, wherein the lifting device (16) comprises two idle rollers (18, 18') arranged vertically, i.e., one on top of the other, on a support structure (19), the support structure (19) comprising an upper bar (19a) on which an actuator (20) acts, for example a pneumatic actuator, for lifting the tail end of a singularized metal sheet (L).

8. The equipment (1) according to claim 6 or 7, wherein the joining unit (17) comprises a movable carriage (22) sliding along the advancement direction of the partially overlapped metal sheets (L), wherein the movable carriage (22) supports an unwinding device (24) for unwinding an adhesive tape (N) from a reel (B) and an applicator device (25) for applying the adhesive tape (N) along the joint of two adjacent metal sheets (L).

9. The equipment (1) according to claim 8, wherein the unwinding device (24) comprises a gripper (26), transversely movable with respect to the advancement direction of the metal sheets (L) between a distal position (A) with respect to the reel (B) and a proximal position (A') with respect to the reel (B), wherein preferably the gripper (26) is of the duckbill type and comprises two jaws (28) in the form of plates, connected to a lever mechanism (29) actuated to open and close by an actuator (30).

10. The equipment (1) according to claim 9, wherein a cutting device (34) is placed in a proximal position (A') with respect to the reel (B), the cutting device (34) being configured to cut a strip of tape (N) to be applied to the joint between two partially overlapped, adjacent metal sheets (L), the cutting device (34) comprising a wire heated blade (35) mounted to a C-shaped support (35a) and an abutment (36) arranged at the bottom, wherein both the support (35a) and the abutment (36) are connected to respective actuators (37, 37') configured to lower the support (35a) and lift the abutment (36), respectively, up to abut between the wire blade (35) and the abutment (36).

11. The equipment (1) according to any one of claims 8 to 10, wherein the applicator device (25) comprises a transverse bar (38) which supports a coupling mask (39) having a lower surface (39a) which negatively reproduces the surface of the metal sheet (L), wherein the coupling mask (39) comprises a plurality of suction cups (40) connected to a vacuum source and wherein the transverse bar (38) is coupled to an actuator (41) configured for a vertical movement of the coupling mask (39), a counter-bar (42) preferably being placed below the coupling mask (39), coupled to an actuator (43) configured for a vertical movement, in the opposite direction with respect to the actuator (41) of the transverse bar (38).

12. The equipment (1) according to any one of claims 1 to 11, wherein the preparation station (4) comprises a bridge structure (44) placed straddling a sliding plane (45) of the jointed metal sheets (L), wherein the bridge structure (44) comprises, in a position adjacent to one end, a feeding member (46) for reinforcing plates (P), wherein a positioning device (47) for the reinforcing plates (P) is operatively connected to the feeding member (46), so as to pick up a plurality of reinforcing plates (P) and deposit them onto a tail end of a metal sheet (L), in an adjacent position with respect to the joint of two metal sheets (L).

13. The equipment (1) according to claim 12, wherein the feeding member (46) comprises a vibrating tank and an orienting chute for the reinforcing plates (P), which deposits a plurality of plates (P) in contact with one another on an accumulation mat (48), wherein the positioning device (47) comprises a transfer device (50) for transferring the plates (P) onto a shuttle (49), on which the plates (P) are positioned in a plurality of seats (49a), one for each reinforcing plate (P), in a row in number and in a spaced apart condition corresponding to that they will take on the metal sheet (L).

14. The equipment (1) according to claim 13, wherein the transfer device (50) comprises a support (50b), which is transversely movable with respect to the shuttle (49), between a gripping position at the accumulation mat (48) and a release position at the shuttle (49), wherein the support (50b) comprises an arm (50a) which supports the suction heads (51).

15. The equipment (1) according to any one of claims 12 to 14, wherein the positioning device (47) comprises a positioning member (52), transversely movable with respect to the advancement direction of the sheets (L) between a gripping position for gripping the reinforcing plates (P) from the shuttle (49) and a release position for releasing the plates (P) onto the metal sheet (L), wherein the positioning member (52) comprises a gripping bar (53) connected to suction means, comprising a plurality of suction cups (53a) arranged at the same distance between the plates (P) on the shuttle (49) and each adapted to pick up a plate (P).

16. The equipment (1) according to claim 15, wherein the gripping bar (53) is connected to a vertical actuation system (54), so as to be lowered onto the shuttle (49) in the gripping position for gripping the plates (P), lifted once the plates (P) have been gripped, lowered to the release position for releasing the plates (P) onto the metal sheet (L), and lifted again to the initial position and wherein the vertical actuation system (54) is secured to a bracket (55) connected to a slide for sliding on the transverse guide (53).
